# FASCICULE DE BREVET EUROPEEN

(11) **EP 4 389 442 B1**
(45) Date de publication et mention de la délivrance du brevet: **03.12.2025**
(21) Numéro de dépôt: 23214438.6
(22) Date de dépôt: 05.12.2023
(51) Int. Cl.: B42D 25/23, B42D 25/24, B42D 25/328, B42D 25/41, B42D 25/485, B41M 3/14, G06V 30/16, B41F 33/00

(54) **PROCÉDÉ DE RECALAGE D'UNE MATRICE DE SOUS-PIXELS AGENCÉE AU SEIN D'UN DOCUMENT DE SÉCURITÉ**
VERFAHREN ZUR REGISTRIERUNG EINER IN EINEM SICHERHEITSDOKUMENT ANGEORDNETEN SUBPIXELMATRIX
METHOD FOR REGISTERING A MATRIX OF SUB-PIXELS ARRANGED IN A SECURITY DOCUMENT

(30) Priorité: 22.12.2022 FR 2214344
(43) Date de publication de la demande: 26.06.2024
(73) Titulaire: IN Smart Identity France, 92400 Courbevoie (FR)
(72) Inventeur: BERTHE, Benoît, 92400 Courbevoie (FR)
(74) Mandataire: Santarelli

(56) Documents cités:
- EP-A1- 3 034 318
- EP-A2- 0 452 700
- US-A1- 2013 328 995
- US-A1- 2022 184 990

## Description

### Domaine Technique

L'invention se rapporte au domaine des documents de sécurité, et en particulier les documents de sécurité sur lesquels des images sont observables, à leur fabrication et leur personnalisation. L'invention s'applique de manière non exclusive aux documents d'identité physiques, tels qu'un passeport, une carte d'identité, un permis de conduire, un permis de séjour, etc.

### Technique antérieure

Le marché de l'identité requiert aujourd'hui des documents d'identité (dits aussi documents identitaires) de plus en plus sécurisés. Ces documents doivent être facilement authentifiables et difficiles à contrefaire (si possible infalsifiables). Ce marché concerne des documents très diverses, tels que cartes d'identité, passeports, badges d'accès, permis de conduire etc., qui peuvent se présenter sous différents formats (cartes, livrets...).

Divers types de documents sécurisés comportant des images ont ainsi été développés au cours du temps, notamment pour identifier de manière sécurisée des personnes. La majorité des passeports, cartes d'identité, permis de conduire, etc. ainsi que bien d'autres documents officiels comportent aujourd'hui des éléments de sécurité qui permettent d'authentifier le document et de limiter les risques de fraudes, falsification ou contrefaçon.

Diverses techniques d'impression ont été développées au fil du temps pour réaliser des impressions en couleur. La réalisation en particulier de documents identitaires tels que ceux précités nécessitent de réaliser des images couleurs de façon sécurisée afin de limiter les risques de falsification par des individus malveillants. La fabrication de tels documents, au niveau en particulier de l'image d'identité du porteur, nécessite d'être suffisamment complexe pour rendre difficile la reproduction ou falsification par un individu non autorisé.

Ainsi, une solution connue consiste à imprimer sur un support une matrice de pixels composés de sous-pixels de couleur et de former des niveaux de gris par carbonisation laser dans une couche lasérisable située en regard de la matrice de pixels, de sorte à révéler une image couleur personnalisée qui est difficile à falsifier ou à reproduire. Des exemples de réalisation de cette technique sont décrits par exemple dans les documents EP 2 580 065 B1 (datant du 6 août 2014) et EP 2 681 053 B1 (datant du 8 avril 2015).

Une autre technique décrite dans le document FR 3 093 302 vise à réaliser des images couleur à partir de diffractions. Cette technique permet de former des images couleur de bonne qualité tout en étant sécurisées et donc résistantes aux falsifications et reproductions frauduleuses. La méthode décrite dans ce document antérieur propose d'utiliser une matrice de sous-pixels qui présentent des couleurs différentes, et par exemple de détruire localement des sous-pixels pour former une image colorée.

Dans ces deux technique, l'utilisation d'un laser est avantageuse car elle permet de personnaliser les documents : une image propre à chaque document peut être formée.

Lorsqu'une matrice de sous-pixels imprimés ou une matrice de sous-pixels présentant un effet diffractif sont agencés au sein d'un document, préalablement à l'application d'un faisceau laser, il est nécessaire de mettre en œuvre un recalage (« registration » en anglais). Ce recalage permet de connaitre, dans un référentiel, la position des sous-pixels, pour appliquer le faisceau laser dans le même référentiel sur les sous-pixels que l'on souhaite effectivement affecter (par noircissement d'une couche ou destruction locale). Le recalage permet d'obtenir un bon positionnement relatif du faisceau laser par rapport aux sous-pixels. En l'absence d'un recalage, les images obtenues peuvent avoir des couleurs erronées (les mauvais sous-pixels ont été noircis, par exemple).

En fait, lors du recalage, on cherche à déterminer à la fois la position dans l'espace de ces matrices, et également les déformations que ces matrices ont subi lors de leur agencement au sein d'un document de sécurité. Par exemple, pour une matrice imprimée, la matrice subit des déformations lors du processus de fabrication (déformation du substrat lors de son passage dans la machine d'impression, fluage du substrat lors du laminage lorsqu'un point de transition vitreuse du substrat est dépassé, déformation. Pour une matrice utilisant des effets diffractifs, des étapes de dépose à chaud peuvent être mises en œuvre, au cours desquelles les matrices peuvent être déformées. Les déformations étant généralement aléatoires, elles varient d'un document à l'autre et l'on comprend bien pourquoi le recalage est nécessaire pour chaque document. Le recalage a en outre un impact sur la sécurité des documents, qui peuvent, s'ils sont mal recalés, produire des images qui ne sont pas celles attendues et empêcher une authentification.

Les méthodes connues de recalage utilisent des marques de recalages qui sont autour ou au sein des matrices, généralement imprimées avec la matrice ou formées dans des couches diffractives simultanément avec les matrices. Ces marques de recalage sont détectées par une caméra et permettent de déterminer une approximation de la déformation que subie une matrice de sous-pixels.

En fait, ces marques définissent un quadrillage qui est censé être selon deux directions orthogonales (elles sont prévues pour former un quadrillage orthonormé), tout comme les matrices. Sur le document réel, une déformation du quadrillage peut être interprétée par un ensemble de courbes polynomiales passant par les marques de recalage.

Cette solution présente plusieurs inconvénients. Tout d'abord, l'utilisation d'un nombre limité de marques de recalage empêche de modéliser des déformations complexes qui peuvent être très localisées. Typiquement, une singularité de la matrice en une zone plus petite que l'espacement entre deux marques de recalage adjacentes ne sera pas prise en compte, cette singularité se retrouvant, après recalage, distribuée sur toute la zone située entre ces deux marques de recalage adjacente.

Ces singularités peuvent être causées par exemple par la présence d'un élément diffractif dans la structure du document qui chevauche totalement ou partiellement la matrice. Cet élement diffractif étant composé de matériaux qui ne se ramollissent pas à la même température de transition vitreuse que le reste de la structure du document, l'élément diffractif peut rester rigide alors que le reste du document est déjà ramolli. Ceci occasionne alors, à la périphérie de l'élément diffractif, un saut, qui suit une sigmoïde très localisée et qui nécessite un modèle de recalage à ce voisinage, beaucoup plus resserré que sur le reste de la surface de la matrice.

Bien que ces marques de recalage soient de petite dimension, elles peuvent être distinguable à l'œil nu. Augmenter leur nombre pour résoudre le problème des déformations complexes réduit la surface utilisable pour former des images, perturbe la périodicité géométrique du réseau colorimétrique, et dégrade les images. Actuellement, on peut utiliser jusqu'à 15 marques de recalage.

Document EP 3 034 318 A1 divulgue un procédé de recalage d'une matrice de sous-pixels agencée au sein d'un document de sécurité.

Il existe donc un besoin pour une solution qui permet de tenir compte de déformations plus complexes, et ce sans augmenter le nombre de marques de recalage.

### Exposé de l'invention

A cet effet, la présente invention propose un procédé de recalage d'une matrice de sous-pixels agencée au sein d'un document de sécurité tel que défini par la revendication 1.

Ainsi, l'opération de recalage, qui est la détermination des coordonnées des sous-pixels de la matrice au sein du document, par exemple dans un référentiel qui est celui d'un équipement de personnalisation utilisable pour former des images en utilisant la matrice (par exemple un équipement utilisant un faisceau laser), n'utilise pas que des marques de recalage visibles, mais également des positions de sous-pixels de la matrice. Ces sous-pixels sont choisis en tenant compte d'une connaissance préalable de la structure de la matrice qui a été imprimée (en d'autres termes les positions cibles des sous-pixels).

En fait, il a été observé qu'entre deux marques de recalage adjacentes, par exemple à la position médiane entre ces deux marques, il est attendu d'observer un sous-pixel associé à une couleur particulière. On peut donc déterminer cette position intermédiaire, puis rechercher le sous-pixel de cette couleur particulière le plus proche. La position de ce sous-pixel est ensuite considérée comme une marque de recalage, pour mettre en œuvre le recalage.

Le recalage utilise ainsi davantage de positions observées sur le document et ce sans augmenter le nombre de marques de recalage qui sont observables sur le document.

L'utilisation de la position du sous-pixel permet de tenir compte plus précisément d'une déformation de la matrice dans une région comprise entre les deux marques adjacentes.

Le procédé peut être mis en œuvre par un ordinateur.

Les courbes d'interpolation peuvent être des lignes se propageant sensiblement dans le sens des directions principales de la matrice, par exemple des courbes sensiblement verticales, et des courbes sensiblement horizontales pour une matrice 2D s'étendant dans ces directions horizontales et verticales. En fait, les courbes d'interpolation peuvent, dans la mesure où suffisamment de marques de recalage sont obtenues, définir un quadrillage ayant une forme analogue à celle de la matrice (avec un pas plus grossier que celui qui sépare les sous-pixels de la matrice). La personne du métier saura choisir le nombre de courbes d'interpolation à déterminer en fonction du nombre de marques de recalage et de positions de sous-pixels déterminées.

Selon un mode de mise en œuvre particulier, on met en œuvre de manière itérative les étapes a à c, et au cours de l'étape a répétée (c'est-à-dire dans une itération qui suit la première mise en œuvre des étapes a à c) on considère la position dudit sous-pixel associé à la couleur d'intérêt comme une position au sein du document de marque de recalage obtenu à l'itération précédente, de sorte qu'aux étapes b et c répétées, les positions des marques de recalage comprennent des positions dudit sous-pixel associé à la couleur d'intérêt comme une position au sein du document de marque de recalage.

Dans ce mode de mise en œuvre, on peut avoir une position intermédiaire qui est entre ce qui était à l'issue de l'itération précédente une position de sous-pixel et qui est considéré à l'itération en cours comme une marque de recalage.

Ce mode de mise en œuvre permet d'augmenter encore plus le nombre de positions qui seront utilisées pour le recalage, sans augmenter le nombre de marques de recalage visibles.

Selon un mode de mise en œuvre particulier, à l'étape b, on détermine plusieurs positions intermédiaires situées entre plusieurs groupes d'au moins deux positions de marques de recalage obtenues (s'il s'agit d'une répétition, cela inclus des positions de sous-pixels) et adjacentes, et à l'étape c, on détermine la position de plusieurs sous-pixels chacun associé à une couleur d'intérêt et le plus proche de l'une des positions intermédiaires.

On peut par exemple déterminer des positions intermédiaires entre chaque paire de marques de recalage adjacentes (chaque paire formant un groupe).

Selon un mode de mise en œuvre particulier, les paramètres de courbes d'interpolation sont des paramètres de splines (des courbes polynomiales dont les dérivées sont continues aux positions des marques de recalage et du sous-pixel associé à la couleur d'intérêt).

L'invention n'est pas limitée aux splines qui sont des courbes polynomiales, mais peut aussi être mise en œuvre avec des systèmes d'harmoniques (soit avec une base de sinus et de cosinus) en tant que courbes d'interpolation.

Selon un mode de mise en œuvre particulier, les splines sont des splines à deux variables (en x et en y) et d'ordre n (par variable, soit jusqu'à xⁿ et yⁿ, par exemple n=3).

Par exemple, pour chaque splines, on peut avoir des splines définis par un système de deux équations, une donnant une position horizontale (une fonction de x), et une donnant une position verticale (une fonction de y), chaque fonction étant d'ordre n.

Selon un mode de mise en œuvre particulier, au cours de l'étape b, la position intermédiaire a une position déterminée de manière relative par rapport aux positions desdites au moins deux marques de recalage obtenues et adjacentes.

Par exemple, la position intermédiaire peut être une position sur une droite reliant les positions de deux marques de recalage adjacentes, par exemple un centre ou une position à une fraction de la distance séparant les deux marques. La position intermédiaire peut être au centroïde de plus de deux marques de recalages toutes adjacentes.

Selon un mode de mise en œuvre particulier, à l'étape c, on vérifie si une distance entre la position dudit sous-pixel associé à une couleur d'intérêt et la position intermédiaire dépasse un premier seuil de distance, et, si le premier seuil de distance est dépassé, le document de sécurité est considéré comme invalide.

Par exemple, si la position du sous-pixel est trop éloignée d'une position attendue pour ce sous-pixel, il est possible qu'une déformation trop importante du document affecte la matrice, de sorte qu'il n'est plus possible d'utiliser le document pour former une image.

Lorsqu'un document est considéré comme invalide, un signal d'alerte en ce sens peut être généré (électrique, sonore, visuel, etc.).

Selon un mode de mise en œuvre particulier, à l'étape c, on vérifie si une distance entre la position dudit sous-pixel associé à une couleur d'intérêt et la position intermédiaire dépasse un deuxième seuil de distance, et, si le deuxième seuil de distance est dépassé, on remet en œuvre l'étape b avec une nouvelle position intermédiaire plus proche de l'une des marques de recalage, et l'on remet en œuvre l'étape c avec la nouvelle position intermédiaire en tant que position intermédiaire.

Par exemple, le deuxième seuil peut être inférieur au premier seuil défini ci-avant. Dans ce mode de réalisation, on considère par exemple que le document est acceptable pour ne pas être considéré comme invalide, mais la position intermédiaire ne fournit pas un point suffisamment proche pour qu'un bon niveau de confiance en ce point soit obtenu. Dès lors, on cherche un autre point plus proche de l'une des positions de marques de recalage choisie parmis les au moins deux positions de marques de recalage de l'étape b.

Ce mode de mise en œuvre particulier permet de tenir compte d'une déformation qui reste acceptable, et néanmoins d'obtenir une position de sous-pixel avec un bon niveau de confiance (c'est-à-dire à une distance en dessous du deuxième seuil de distance). Dans le cas où des itérations sont mises en œuvres, on pourra ainsi n'utiliser que des positions de sous-pixel avec un bon niveau de confiance (une distance par rapport aux positions intermédiaires (supplémentaires) inférieure au deuxième seuil de distance).

Selon un mode de mise en œuvre particulier, le procédé comprend, après la mise en œuvre de l'étape e et avant la mise en œuvre de l'étape f, une phase comprenant : une détermination de positions de sous-pixels supplémentaires agencés sur lesdites courbes d'interpolation et situés entre des marques de recalage à des positions définies par rapport au marques de recalage, une détermination d'un ensemble de paramètres de courbes d'interpolation supplémentaires passant par lesdites positions des sous-pixels supplémentaires, et dans lequel à l'étape e, on met en œuvre un recalage de la matrice de sous-pixels au moyen de l'ensemble de paramètres de courbes d'interpolation, de l'ensemble de paramètres de courbes d'interpolation supplémentaires, et de l'ensemble des positions des sous-pixels supplémentaires, des positions cibles des sous-pixels.

Selon un mode de mise en œuvre particulier, les courbes d'interpolation définissent des éléments finis, et, pour chaque élément fini, on détermine des paramètres de courbes d'interpolation supplémentaires propre à chaque élément fini, les positions des sous-pixels supplémentaires étant des points de l'élément fini.

Pour définir un élément fini, on utilise par exemple quatre courbes d'interpolation qui se croisent pour entourer une zone appelée élément fini. Les contours des éléments finis sont placés sur des courbes d'interpolation et c'est sur ces contours que l'on peut chercher les positions de sous-pixels supplémentaires.

Les courbes d'interpolation supplémentaires peuvent être continues (et par nécessairement avec des dérivées continues) entre des éléments finis contigus. A cet effet, elles passent par des positions partagées entre deux éléments finis pour des éléments finis contigus.

Aussi, pour chaque élément fini, on a aussi un système d'équation tel que ceux décrits ci-avant à résoudre.

Selon un mode de mise en œuvre particulier, les sous-pixels sont agencés, par leur position cible, selon un motif répété de sous-pixels tous associés à des couleurs différentes.

Par exemple, la sous-matrice peut comprendre des motifs de trois pixels associés respectivement au jaune, au cyan, et au magenta, selon une base de couleur typique. D'autres motifs peuvent être utilisés, par exemple des motifs avec des sous-pixels associés respectivement au rouge, au vert, et au bleu.

Selon un mode de mise en œuvre particulier, les sous-pixels sont imprimés sur une couche du document et les sous-pixels d'un même motif ont chacun une couleur différente pour former une base de couleur (typiquement cyan-jaune-magenta ou rouge-vert-bleu), ou les sous-pixels sont formés dans une couche diffractive du document et les sous-pixels d'un même motif produisent chacun un effet coloré différent par diffraction pour former une base de couleur (typiquement cyan-jaune-magenta ou rouge-vert-bleu).

Selon un mode de mise en œuvre particulier, on met en œuvre une personnalisation du document de sécurité basée sur le recalage de la matrice de sous-pixels.

La personnalisation peut comprendre la modification du document pour qu'une image propre au document soit visible lorsque le document est observé. La personnalisation peut comprendre l'application d'un faisceau laser, par exemple pour noircir une couche lasérisable (comprenant des particules qui deviennent noires par carbonisation) au-dessus d'une matrice imprimée, ou encore l'application d'un faisceau laser pour la destruction localisée d'une couche diffractive.

L'invention propose également un système de recalage d'une matrice de sous-pixels agencée au sein d'un document de sécurité tel que défini par la revendication 14.

Ce système peut être configuré pour la mise en œuvre de tous les modes de mise en œuvre du procédé décrit ci-avant.

L'invention propose également un programme d'ordinateur tel que défini par la revendication 15.

A noter que les programmes d'ordinateur mentionnés dans le présent exposé peuvent utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention propose également un support d'enregistrement lisible par un ordinateur tel que défini par la revendication 16.

Les supports d'enregistrement (ou d'information) mentionnés dans le présent exposé peuvent être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple un disque dur.

D'autre part, les supports d'enregistrement peuvent correspondre à un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, les supports d'enregistrement peuvent correspondre à un circuit intégré dans lequel le programme est incorporé, le circuit étant adapté pour exécuter ou pour être utilisé dans l'exécution du procédé en question.

### Brève description des dessins

D'autres caractéristiques et avantages de la présente invention ressortiront de la description faite ci-dessous, en référence aux dessins annexés qui en illustrent des exemples de réalisation dépourvus de tout caractère limitatif. Sur les figures:
La figure 1 montre, de manière simplifiée, une matrice avec des sous-pixels en leur position cible,
La figure 2 montre, de manière simplifiée, une matrice déformée,
La figure 3 montre l'identification de sous-pixels utilisables comme marques de recalage,
La figure 4 montre des marques de recalage détectées,
La figure 5 montre des sous-pixels identifiés,
La figure 6 montre d'autres sous-pixels identifiés au cours d'une itération ultérieure,
La figure 7 montre d'autres sous-pixels identifiés au cours d'une itération ultérieure, et
La figure 8 montre un système selon un exemple.

### Description des modes de réalisation

On va maintenant décrire le recalage d'une matrice de sous-pixels agencée au sein d'un document de sécurité.

Les matrices décrites ici sont des matrices de sous pixels chacun associé à une couleur. En fait, ces matrices peuvent être imprimées sur une couche du document de sécurité. Une matrice imprimée peut comprendre un motif de sous-pixels colorés car imprimé en différentes couleurs, ce motif étant répété et comprenant des pixels de couleurs différentes pour former une base de couleur (par exemple cyan-jaune-magenta ou rouge-vert-bleu). Un agencement possible pour une matrice imprimé est une répétition de lignes cyan-jaune-magenta selon une direction.

Les matrices discutées ici peuvent également être formée dans une couche diffractive du document de sécurité, avec un motif qui est également répété dans lequel les sous-pixels produisent chacun un effet diffractif d'une couleur différente (encore une fois de sorte à former une base de couleur cyan-jaune-magenta ou rouge-vert-bleu) au moyen de texturations différentes.

Les modes de réalisation qui seront décrit ci-après sont particulièrement bien adaptés pour les documents de sécurité personnalisables, pour lesquels les matrices sont utilisées pour former des images personnalisées, en tenant compte de la position individuelle des sous-pixels au sein des documents (le résultat du recalage). Cela peut se faire par application d'un faisceau laser pour noircir une couche laserisable (typiquement au-dessus d'une couche imprimée), ou encore par application d'un faisceau laser pour détruire des sous-pixels (typiquement des sous-pixels d'une couche diffractive).

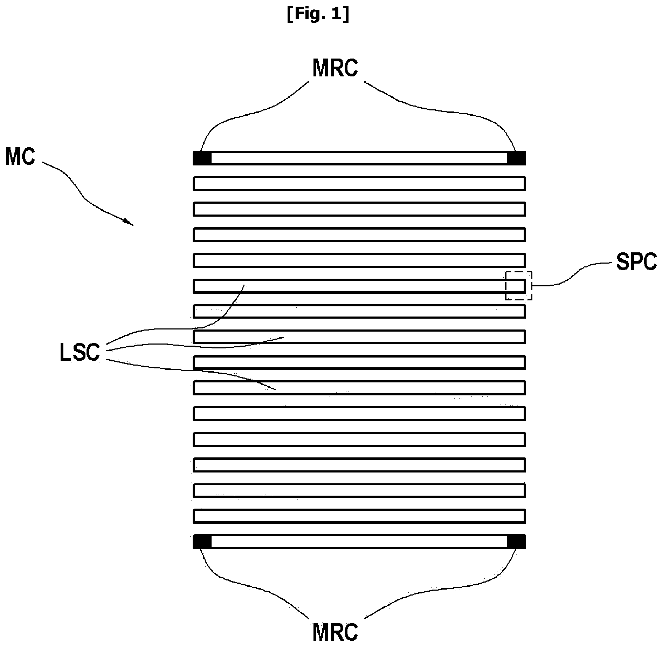

Sur la figure 1, on a représenté partiellement une matrice MC de sous-pixels SPC tel que l'on souhaite l'imprimer au sein d'un document de sécurité, avec pour des raisons de simplicité une seule couleur de sous-pixels représentée. En fait, sur cette figure, les sous-pixels SPC sont à leur position cible, et la représentation correspond à celle que l'on obtient par exemple à partir d'un fichier informatique qui décrit la matrice. La matrice est donc ici bien agencée selon un motif orthonormé.

Ici, on a représenté uniquement les sous-pixels de couleur cyan, ces sous-pixels étant agencés au sein de lignes LSC (selon la direction horizontale sur la figure, une ligne comportant plusieurs sous-pixels cyan d'une largeur donnée), qui se répètent (selon la direction verticale sur la figure), pour former un quadrillage régulier. On peut noter qu'entre deux lignes cyan LSC, il est prévu une ligne magenta et une ligne jaune.

Pour mettre en œuvre un recalage, on a prévu quatre marques de recalages MRC représentées ici à leur position cible. Ces quatre marques définissent un rectangle ici. Ces marques ont une forme et une couleur prédéfinie.

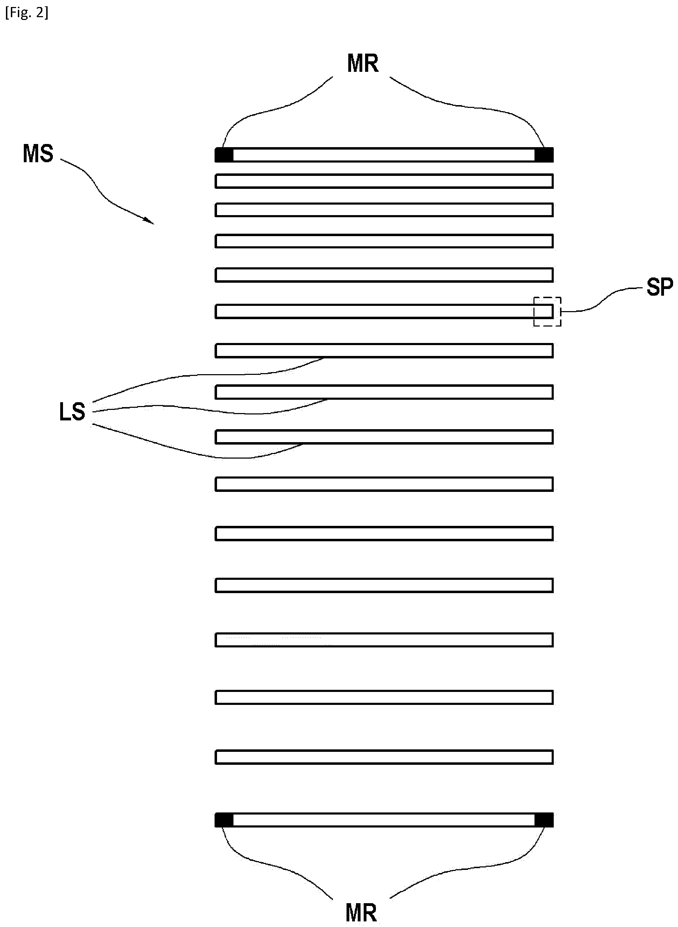

Sur la figure 2, on a représenté le résultat d'un agencement de la matrice MC au sein d'un document, pour obtenir la matrice MS. La matrice MS est une matrice réelle, tandis que la matrice MC peut être appelée matrice virtuelle. La matrice MC peut par exemple avoir été obtenue par impression sur une couche d'un document de sécurité.

Comme on peut le voir sur la figure, les lignes LS de couleur cyan des sous-pixels SP ont un espacement qui n'est pas régulier, et qui augmente lorsque l'on se déplace vers le bas sur la figure. L'invention n'est pas limitée à ces déformations selon une seule direction, d'autres déformations plus complexes pouvant apparaître au sein des documents de sécurité.

Sur le document de sécurité, on a également implémenté des marques de recalage MR correspondant aux marques de recalage MRC décrites ci-avant.

A partir d'une image acquise de la matrice MS, on peut mettre en œuvre un recalage. Ce procédé de recalage peut être mis en œuvre par un ordinateur, par exemple un ordinateur connecté à une caméra qui peut acquérir l'image de la matrice MS. Ce procédé peut également être mis en œuvre par un ordinateur connecté à un réseau de communication et qui reçoit l'image de la matrice MS par l'intermédiaire de ce réseau de communication.

Dans une première étape, on peut obtenir la position au sein du document de sécurité des marques de recalage. Cette étape peut être mise en œuvre au moyen d'un algorithme de détection de forme configuré pour détecter la forme des marques de recalage. Des coordonnées sont obtenues à l'issue de cette étape, dans un référentiel lié par exemple à une machine de personnalisation (équipée d'un laser).

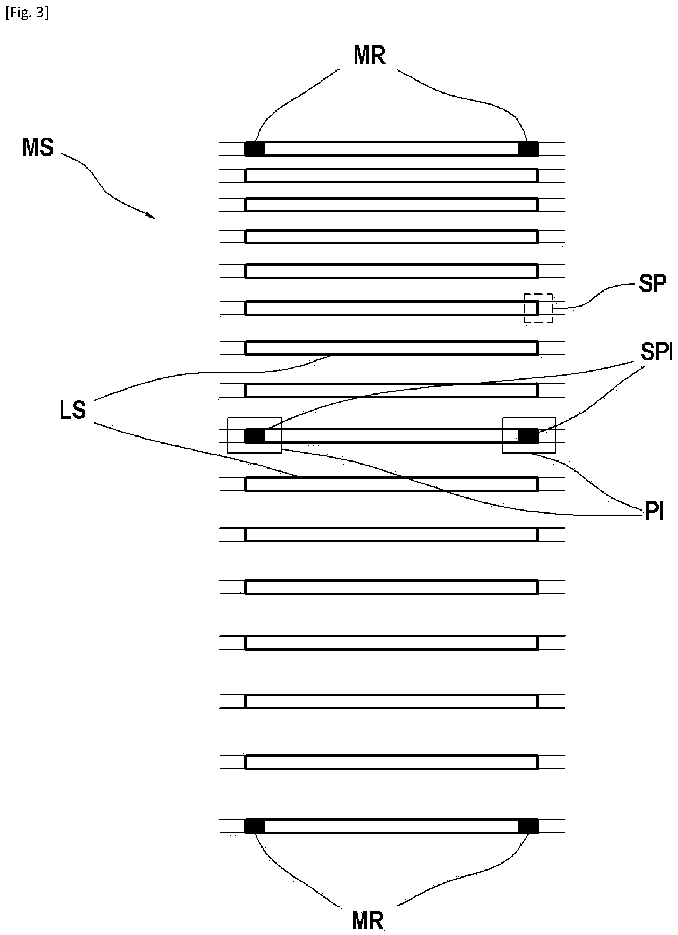

Dans une deuxième étape, illustrée sur la figure 3, on détermine deux positions intermédiaires PI. Ici, on choisit de considérer comme position intermédiaire la position située au milieu sur une droite passant par deux positions de marques de recalage adjacentes dans la direction verticale sur la figure. On a donc considéré deux groupes de positions de marques de recalage, les deux paires verticales de positions de marques de recalage.

Les positions intermédiaires PI sont représentées ici par un rectangle centré sur ces positions situées au milieu entre les paires de positions de marques de recalage.

En fait, on va déterminer la position du sous-pixel associé à une couleur d'intérêt (ici le cyan) qui est le plus proche de la position intermédiaire, et qui est en outre à une distance inférieure à un seuil de distance (fixé préalablement), ce qui est représenté par un rectangle ici. Les positions SPI de deux sous-pixels de ce type sont obtenues. On peut noter que si le sous-pixel de couleur cyan le plus proche de la position intermédiaire et associé à la couleur d'intérêt et à une distance qui dépasse le seuil de distance (appelé premier seuil), le document de sécurité est considéré comme invalide, car cela peut refléter une déformation trop importante de la matrice.

Si par contre la distance est inférieure à ce premier seuil mais dépasse un deuxième seuil, on considère qu'un niveau de confiance n'est pas atteint, et l'on peut choisir une position intermédiaire plus proche de l'une des marques de recalage utilisée initialement.

Une fois la positions de deux sous-pixels cyan déterminée, on peut déterminer un ensemble de paramètres de courbes d'interpolation passant par les positions des marques de recalage MR et par les positions des sous-pixels associés à la couleur d'intérêt SPI. Par exemple, il peut s'agir de paramètres de splines d'ordre 3.

A partir des paramètres de splines, on peut mettre en œuvre un recalage de la matrice dans lequel on va modifier les positions cibles des sous-pixels (illustrées sur la figure 1). Cette modification peut être mise en œuvre par une transformation géométrique. On connait les coordonnées cibles ou positions cibles en x et en y de chaque point. On connait l'ensemble des courbes d'interpolation qui représentent avec une très faible erreur résiduelle la déformation réelle de la matrice. On applique ce même jeu de courbes d'interpolation au coordonnées x, y cibles pour les transformer en x', y'. Ainsi on aura déformé l'image qui sera envoyée au laser (si l'on utilise un laser comme outil de personnalisation) de la déformation la plus représentative de la déformation de la matrice et ainsi, les points laser réels seront bien au droit des sous pixels réels pour lesquels ils avaient été calculés.

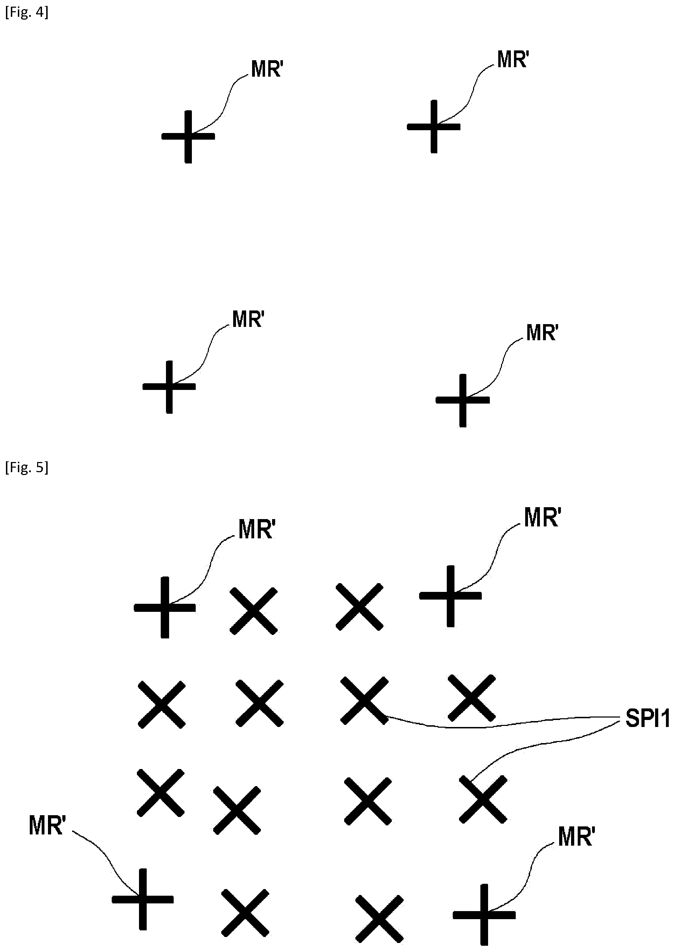

La figure 4 montre un exemple de marques de recalage d'une matrice dont les positions ont été obtenues comme expliqué en référence à la figure 2. Pour des raisons de simplicité, les sous-pixels de la matrice n'ont pas été représentés.

Comme illustré sur la figure 5, on peut déterminer des sous-pixels tous associés à une couleur d'intérêt, en_formant un quadrillage passant par les quatre positions des marques de recalage et ayant un pas égal à 1/3 de la distance séparant deux marques de recalage choisies (ou éventuellement un pas plus petit comme expliqué ci-avant en cas de distance supérieure au deuxième seuil). Les intersections de ce quadrillage sont des positions intermédiaires et à chaque position intermédiaire, on détermine la position SPI1 du sous-pixel de la couleur d'intérêt le plus proche. On obtient ainsi 12 positions SPI1 de sous-pixel et 4 positions de marques de recalage MR'.

A ce stade, on peut déterminer des paramètres de courbes d'interpolation qui passent par les points, par exemple pour seulement les courbes alignées sensiblement selon deux directions orthogonales, pour définir un quadrillage.

L'exemple illustré peut être itératif, ainsi, on peut déterminer davantage de points situés entre deux trouvés dans l'exemple de la figure 5.

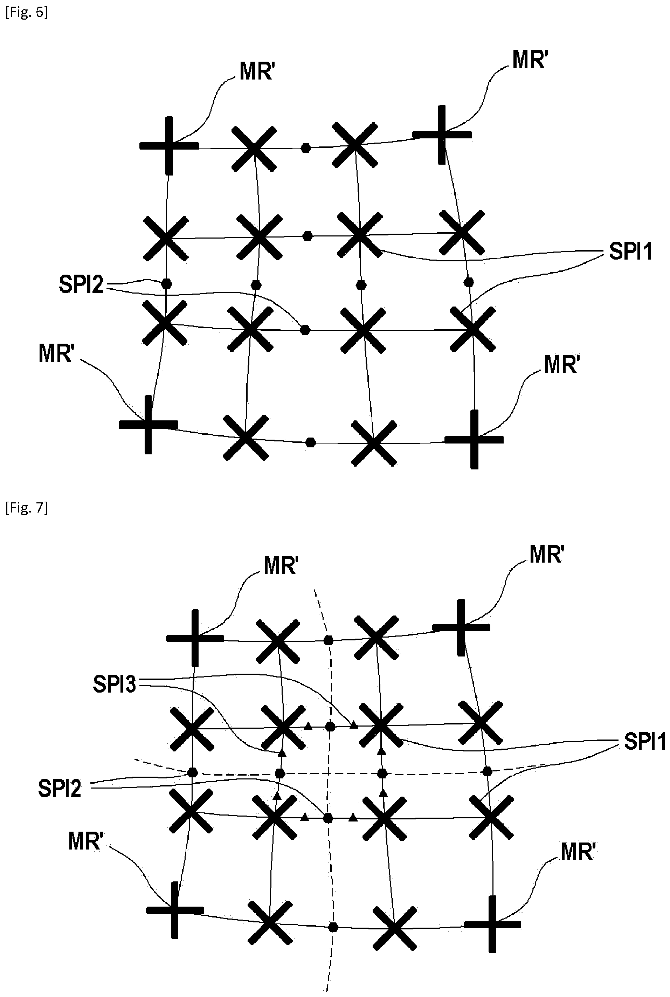

Sur la figure 6, on a représenté l'obtention d'autres positions SPI2 de sous-pixels, qui sont des positions de sous-pixels supplémentaires. Pour obtenir les positions SPI2, détermine des positions situées sur les courbes d'interpolation déterminées avec les points de la figure 5.

Sur la figure 7, on a représenté l'obtention d'autres positions de sous-pixels supplémentaires SPI3 de sous-pixels. Pour obtenir les positions SPI3, on détermine des positions intermédiaires en considérant les positions SPI1, les positions SPI2, et les positions des marques de recalage.

Cela peut être mis en œuvre pour tous les éléments finis obtenus ici (les cases du quadrillage formé par les courbes d'interpolation).

Et pour chaque élément fini, on obtient un nombre donné de points ou positions de sous-pixels, pour déterminer des paramètres de courbes d'interpolation supplémentaires propre à chaque élément fini, les positions des sous-pixels supplémentaires étant des points de l'élément fini. Par exemple, on pourra résoudre un système d'équations pour chaque élément fini pour définir la déformation à appliquer à la matrice.

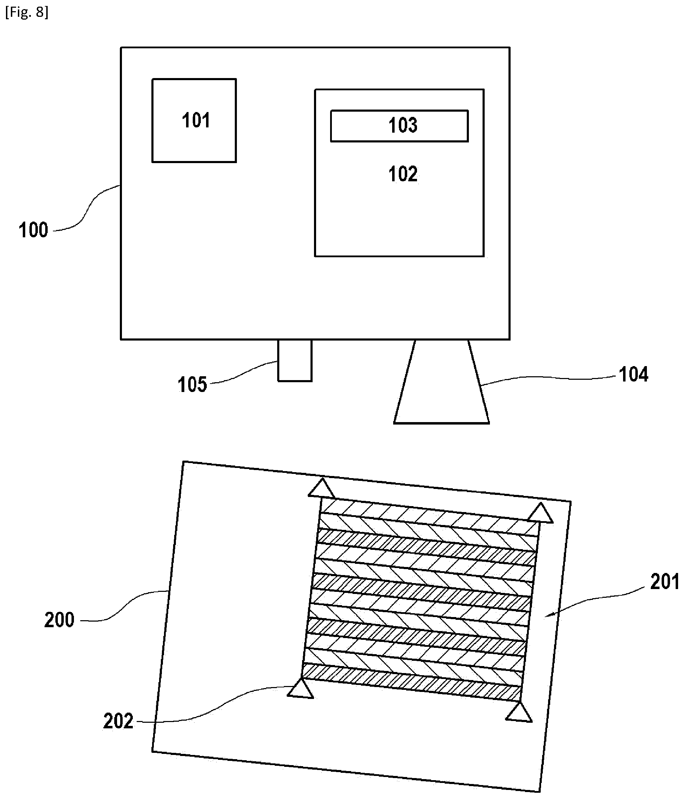

Sur la figure 8, on a représenté un système 100 de recalage d'une matrice de sous-pixels configuré pour mettre en œuvre le procédé décrit en référence aux figures 1 à 7.

Le système 100 a une structure d'ordinateur et il comporte un processeur 101 capable d'exécuter des instructions de programme d'ordinateur stockées dans une mémoire non volatile 102 du système 100. Plus précisément, ici, un programme d'ordinateur 103 est stocké dans la mémoire non volatile 102. Le programme d'ordinateur 103 comprend des instructions pour l'exécution des étapes d'un procédé de recalage d'une matrice de sous-pixels agencée au sein d'un document de sécurité, les sous-pixels étant chacun associés à une couleur et à une position cible, le document comprenant en outre des marques de recalage agencées autour ou au sein de la matrice de sous-pixels, chaque marque de recalage ayant une forme donnée et étant associée à au moins une couleur le procédé comprenant :
a - une obtention de la position au sein du document des marques de recalage,
b - une détermination d'une position intermédiaire située entre au moins deux positions de marques de recalage obtenues et adjacentes,
c - une détermination de la position du sous-pixel associé à une couleur d'intérêt qui est le plus proche de la position intermédiaire,
d - une détermination d'un ensemble de paramètres de courbes d'interpolation passant par les positions des marques de recalage et par la position dudit sous-pixel associé à la couleur d'intérêt,
e - un recalage de la matrice de sous-pixels au moyen de l'ensemble de paramètres de courbes d'interpolation et des positions cibles des sous-pixels.

Pour mettre en œuvre ce procédé, le système 100 est en outre équipé d'une caméra 104 capable d'acquérir des images d'un document de sécurité 200.

Le document de sécurité 200 comprend une matrice 201 de sous-pixels pouvant être utilisé pour le procédé de recalage, et des marques de recalage 202.

Le système 100 a en outre une fonction de personnalisation, et il comporte à cet effet un laser 105. Ce laser a besoin de connaître les positions des sous-pixels de la matrice 201 au sein du document 200, dans son référentiel, pour mettre en œuvre une personnalisation (par noircissement d'une couche lasérisable ou encore par destruction localisée de sous-pixels).

## Revendications

1. Procédé de recalage d'une matrice de sous-pixels agencée au sein d'un document de sécurité, les sous-pixels étant chacun associés à une couleur et à une position cible,
le document comprenant en outre des marques de recalage agencées autour ou au sein de la matrice de sous-pixels (SP), chaque marque de recalage ayant une forme donnée et étant associée à au moins une couleur, le procédé comprenant :
a - une obtention de la position au sein du document des marques de recalage (MR),
b - une détermination d'une position intermédiaire (PI) située entre au moins deux positions de marques de recalage obtenues et adjacentes,
c - une détermination de la position (SPI) du sous-pixel associé à une couleur d'intérêt qui est le plus proche de la position intermédiaire,
d - une détermination d'un ensemble de paramètres de courbes d'interpolation passant par les positions des marques de recalage et par la position dudit sous-pixel associé à la couleur d'intérêt (SPI),
e - un recalage de la matrice de sous-pixels au moyen de l'ensemble de paramètres de courbes d'interpolation et des positions cibles des sous-pixels.

2. Procédé selon la revendication 1, dans lequel on met en œuvre de manière itérative les étapes a à c, et au cours de l'étape a répétée on considère la position dudit sous-pixel associé à la couleur d'intérêt comme une position au sein du document de marque de recalage obtenu à l'itération précédente, de sorte qu'aux étapes b et c répétée, les positions des marques de recalage comprennent des positions dudit sous-pixel associé à la couleur d'intérêt comme une position au sein du document de marque de recalage.

3. Procédé selon la revendication 1 ou 2, dans lequel à l'étape b, on détermine plusieurs positions intermédiaires situées entre plusieurs groupes d'au moins deux positions de marques de recalage obtenues et adjacentes, et à l'étape c, on détermine la position de plusieurs sous-pixels chacun associé à une couleur d'intérêt et le plus proche de l'une des positions intermédiaires.

4. Procédé selon l'une quelconque des revendications 1 à 3, dans lequel les paramètres de courbes d'interpolation sont des paramètres de splines.

5. Procédé selon la revendication 4, dans lequel les splines sont des splines à deux variables et d'ordre n.

6. Procédé selon l'une quelconque des revendications 1 à 5, dans lequel au cours de l'étape b, la position intermédiaire a une position déterminée de manière relative par rapport aux positions desdites au moins deux marques de recalage obtenues et adjacentes.

7. Procédé selon l'une quelconque des revendications 1 à 6, dans lequel à l'étape c, on vérifie si une distance entre la position dudit sous-pixel associé à une couleur d'intérêt et la position intermédiaire dépasse un premier seuil de distance, et, si le premier seuil de distance est dépassé, le document de sécurité est considéré comme invalide.

8. Procédé selon l'une quelconque des revendications 1 à 7, dans lequel à l'étape c, on vérifie si une distance entre la position dudit sous-pixel associé à une couleur d'intérêt et la position intermédiaire dépasse un deuxième seuil de distance, et, si le deuxième seuil de distance est dépassé, on remet en œuvre l'étape b avec une nouvelle position intermédiaire plus proche de l'une des marques de recalage, et l'on remet en œuvre l'étape c avec la nouvelle position intermédiaire en tant que position intermédiaire.

9. Procédé selon l'une quelconque des revendications 1 à 8, comprenant, après la mise en œuvre de l'étape e et avant la mise en œuvre de l'étape f, une phase comprenant :
une détermination de positions de sous-pixels supplémentaires agencés sur lesdites courbes d'interpolation et situés entre des marques de recalage à des positions définies par rapport au marques de recalage,
une détermination d'un ensemble de paramètres de courbes d'interpolation supplémentaires passant par lesdites positions des sous-pixels supplémentaires,
et dans lequel à l'étape e, on met en œuvre un recalage de la matrice de sous-pixels au moyen de l'ensemble de paramètres de courbes d'interpolation, de l'ensemble de paramètres de courbes d'interpolation supplémentaires, et de l'ensemble des positions des sous-pixels supplémentaires, des positions cibles des sous-pixels.

10. Procédé selon la revendication 9, dans lequel les courbes d'interpolation définissent des éléments finis, et, pour chaque élément fini, on détermine des paramètres de courbes d'interpolation supplémentaires propre à chaque élément fini, les positions des sous-pixels supplémentaires étant des points de l'élément fini.

11. Procédé selon l'une quelconque des revendications 1 à 10, dans lequel les sous-pixels sont agencés, par leur position cible, selon un motif répété de sous-pixels tous associés à des couleurs différentes.

12. Procédé selon la revendication 11, dans lequel les sous-pixels sont imprimés sur une couche du document et les sous-pixels d'un même motif ont chacun une couleur différente pour former une base de couleur, ou les sous-pixels sont formés dans une couche diffractive du document et les sous-pixels d'un même motif produisent chacun un effet coloré différent par diffraction pour former une base de couleur.

13. Procédé selon l'une quelconque des revendications 1 à 12, dans lequel on met en œuvre une personnalisation du document de sécurité basée sur le recalage de la matrice de sous-pixels.

14. Système de recalage d'une matrice de sous-pixels (201) agencée au sein d'un document de sécurité (200), les sous-pixels étant chacun associés à une couleur et à une position cible,
le document comprenant en outre des marques de recalage (202) agencées autour ou au sein de la matrice de sous-pixels, chaque marque de recalage ayant une forme donnée et étant associée à au moins une couleur, le système étant configuré pour mettre en œuvre :
a - une obtention de la position au sein du document des marques de recalage (MR),
b - une détermination d'une position intermédiaire (PI) située entre au moins deux positions de marques de recalage obtenues et adjacentes,
c - une détermination de la position (SPI) du sous-pixel associé à une couleur d'intérêt qui est le plus proche de la position intermédiaire,
d - une détermination d'un ensemble de paramètres de courbes d'interpolation passant par les positions des marques de recalage et par la position dudit sous-pixel associé à la couleur d'intérêt,
e - un recalage de la matrice de sous-pixels au moyen de l'ensemble de paramètres de courbes d'interpolation et des positions cibles des sous-pixels.

15. Programme d'ordinateur comportant des instructions pour l'exécution des étapes d'un procédé d'authentification selon l'une quelconque des revendications 1 à 13, lorsque ledit programme est exécuté par un ordinateur du système selon la revendication 14.

16. Support d'enregistrement lisible par un ordinateur sur lequel est enregistré un programme d'ordinateur comprenant des instructions pour l'exécution sur le système selon la revendication 14 des étapes d'un procédé d'authentification selon l'une quelconque des revendications 1 à 13.

## Patentansprüche

1. Verfahren zum Abgleichen einer Matrix von Subpixeln, die in einem Sicherheitsdokument angeordnet sind, wobei die Subpixel jeweils einer Farbe und einer Zielposition zugeordnet sind, wobei das Dokument ferner Abgleichmarkierungen umfasst, die um oder innerhalb der Matrix von Subpixeln (SP) angeordnet sind, wobei jede Abgleichmarkierung eine bestimmte Form aufweist und mindestens einer Farbe zugeordnet ist, wobei das Verfahren Folgendes umfasst:
a - Erreichen der Position innerhalb des Dokuments der Abgleichmarkierungen (MR),
b - Bestimmen einer Zwischenposition (PI), die sich zwischen mindestens zwei Positionen von erhaltenen und benachbarten Abgleichmarkierungen befindet,
c - Bestimmen der Position (SPI) des Subpixels, das einer gewünschten Farbe zugeordnet ist, die der Zwischenposition am nächsten kommt,
d - Bestimmen eines Satzes von Interpolationskurvenparametern, die durch die Positionen der Abgleichmarkierungen und durch die Position des mit der gewünschten Farbe (SPI) verbundenen Subpixels verlaufen,
e - Abgleichen der Subpixelmatrix anhand des Satzes von Interpolationskurvenparametern und der Zielpositionen der Subpixel.

2. Verfahren nach Anspruch 1, wobei die Schritte a bis c iterativ durchgeführt werden und während des wiederholten Schritts a die Position des mit der gewünschten Farbe verbundenen Subpixels als eine Position innerhalb des in der vorherigen Iteration erhaltenen Abgleichmarkierungsdokuments betrachtet wird, so dass in den wiederholten Schritten b und c die Positionen der Abgleichmarkierungen Positionen des Subpixels umfassen, die der gewünschten Farbe als Position innerhalb des Abgleichmarkierungsdokuments zugeordnet sind.

3. Verfahren nach Anspruch 1 oder 2, wobei in Schritt b mehrere Zwischenpositionen bestimmt werden, die sich zwischen mehreren Gruppen von mindestens zwei erhaltenen und benachbarten Positionen von Abgleichmarkierungen befinden, und in Schritt c die Position mehrerer Subpixel bestimmt wird, die jeweils einer gewünschten Farbe zugeordnet sind und einer der Zwischenpositionen am nächsten liegen.

4. Verfahren nach einem der Ansprüche 1 bis 3, wobei die Interpolationskurvenparameter Spline-Parameter sind.

5. Verfahren nach Anspruch 4, wobei die Splines Splines mit zwei Variablen und n-Ordnung sind.

6. Verfahren nach einem der Ansprüche 1 bis 5, wobei die Zwischenposition während des Schritts b eine Position aufweist, die relativ zu den Positionen der mindestens zwei erhaltenen und benachbarten Abgleichmarkierungen bestimmt ist.

7. Verfahren nach einem der Ansprüche 1 bis 6, wobei in Schritt c geprüft wird, ob ein Abstand zwischen der Position des mit einer gewünschten Farbe verbundenen Subpixels und der Zwischenposition einen ersten Abstandsschwellenwert überschreitet und, wenn der erste Abstandsschwellenwert überschritten wird, das Sicherheitsdokument als ungültig angesehen wird.

8. Verfahren nach einem der Ansprüche 1 bis 7, wobei in Schritt c geprüft wird, ob ein Abstand zwischen der Position des mit einer gewünschten Farbe verbundenen Subpixels und der Zwischenposition einen zweiten Abstandsschwellenwert überschreitet und, wenn der zweite Abstandsschwellenwert überschritten wird, Schritt b mit einer neuen Zwischenposition, die näher an einer der Abgleichmarkierungen liegt, erneut implementiert wird und Schritt c mit der neuen Zwischenposition als Zwischenposition erneut implementiert wird.

9. Verfahren nach einem der Ansprüche 1 bis 8, umfassend, nach der Durchführung von Schritt e und vor der Durchführung von Schritt f, eine Phase umfassend:
Bestimmen zusätzlicher Subpixelpositionen, die auf den Interpolationskurven angeordnet sind und sich zwischen Abgleichmarkierungen an definierten Positionen in Bezug auf die Abgleichmarkierungen befinden,
Bestimmen eines Satzes zusätzlicher Interpolationskurvenparameter, die durch die Positionen der zusätzlichen Subpixel verlaufen, und wobei in Schritt e ein Abgleichen der Subpixelmatrix mittels des Satzes zusätzlicher Interpolationskurvenparameter, des Satzes zusätzlicher Interpolationskurvenparameter und des Satzes zusätzlicher Subpixelpositionen, der Zielpositionen der Subpixel, implementiert wird.

10. Verfahren nach Anspruch 9, wobei die Interpolationskurven endliche Elemente definieren und für jedes endliche Element zusätzliche Interpolationskurvenparameter bestimmt werden, die für jedes endliche Element spezifisch sind, wobei die Positionen der zusätzlichen Subpixel Punkte des endlichen Elements sind.

11. Verfahren nach einem der Ansprüche 1 bis 10, wobei die Subpixel durch ihre Zielposition nach einem wiederholten Muster von Subpixeln angeordnet sind, die alle mit unterschiedlichen Farben verbunden sind.

12. Verfahren nach Anspruch 11, wobei die Subpixel auf eine Schicht des Dokuments gedruckt sind und die Subpixel desselben Musters jeweils eine andere Farbe aufweisen, um eine Farbbasis zu bilden, oder die Subpixel in einer diffraktiven Schicht des Dokuments gebildet sind und die Subpixel desselben Musters jeweils einen anderen Farbeffekt durch Beugung erzeugen, um eine Farbbasis zu bilden.

13. Verfahren nach einem der Ansprüche 1 bis 12, wobei eine Personalisierung des Sicherheitsdokuments basierend auf der Neukalibrierung der Subpixelmatrix implementiert wird.

14. System zum Abgleichen einer innerhalb eines Sicherheitsdokuments (200) angeordneten Subpixelmatrix (201), wobei die Subpixel jeweils einer Farbe und einer Zielposition zugeordnet sind,
wobei das Dokument ferner Abgleichmarkierungen (202) umfasst, die um oder innerhalb der Subpixelmatrix angeordnet sind, wobei jede Abgleichmarkierung eine bestimmte Form aufweist und mindestens einer Farbe zugeordnet ist, wobei das System so konfiguriert ist, dass es Folgendes implementiert:
a - Erreichen der Position innerhalb des Dokuments der Abgleichmarkierungen (MR),
b - Bestimmen einer Zwischenposition (PI), die sich zwischen mindestens zwei Positionen von erhaltenen und benachbarten Abgleichmarkierungen befindet,
c - Bestimmen der Position (SPI) des Subpixels, das einer gewünschten Farbe zugeordnet ist, die der Zwischenposition am nächsten kommt,
d - Bestimmen eines Satzes von Interpolationskurvenparametern, die durch die Positionen der Abgleichmarkierungen und durch die Position des mit der gewünschten Farbe verbundenen Subpixels verlaufen,
e - Abgleichen der Subpixelmatrix anhand des Satzes von Interpolationskurvenparametern und der Zielpositionen der Subpixel.

15. Computerprogramm mit Anweisungen zur Durchführung der Schritte eines Authentifizierungsverfahrens nach einem der Ansprüche 1 bis 13, wenn das Programm von einem Computer des Systems nach Anspruch 14 ausgeführt wird.

16. Computerlesbares Speichermedium, auf dem ein Computerprogramm gespeichert ist, das Anweisungen zum Ausführen der Schritte eines Authentifizierungsverfahrens nach einem der Ansprüche 1 bis 13 auf dem System nach Anspruch 14 umfasst.

## Claims

1. Method for registering a matrix of subpixels arranged within a security document, the subpixels each being associated with a colour and a target position, the document further comprising registration marks arranged around or within the matrix of subpixels (SP), each registration mark having a given form and being associated with at least one colour, the method comprising:
a - obtaining the position within the document of the registration marks (MR),
b - determining an intermediate position (PI) located between at least two positions of obtained and adjacent registration marks,
c - determining the position (SPI) of the subpixel associated with a colour of interest that is closest to the intermediate position,
d - determining a set of interpolation curve parameters passing through the positions of the registration marks and through the position of said subpixel associated with the colour of interest (SPI),
e - registering the subpixel matrix using the set of interpolation curve parameters and the target positions of the subpixels.

2. Method according to claim 1, wherein steps a to c are iteratively implemented, and during the repeated step a the position of said sub-pixel associated with the colour of interest is considered as a position within the registration mark document obtained in the previous iteration, so that in the repeated steps b and c, the positions of the registration marks comprise positions of said sub-pixel associated with the colour of interest as a position within the registration mark document.

3. Method according to claim 1 or 2, wherein, in step b, several intermediate positions located between several groups of at least two obtained and adjacent registration mark positions are determined, and in step c the position of several subpixels each associated with a colour of interest and closest to one of the intermediate positions is determined.

4. Method according to any one of claims 1 to 3, wherein the interpolation curve parameters are spline parameters.

5. Method according to claim 4, wherein the splines are two-variable, n^{th}-order splines.

6. Method according to any one of claims 1 to 5, wherein, during step b, the intermediate position has a position determined relatively with respect to the positions of said at least two obtained and adjacent registration marks.

7. Method according to any one of claims 1 to 6, wherein, in step c, it is checked whether a distance between the position of said sub-pixel associated with a colour of interest and the intermediate position exceeds a first distance threshold, and, if the first distance threshold is exceeded, the security document is considered invalid.

8. Method according to any one of claims 1 to 7, wherein, in step c, it is checked whether a distance between the position of said sub-pixel associated with a colour of interest and the intermediate position exceeds a second distance threshold, and, if the second distance threshold is exceeded, step b is implemented again with a new intermediate position closer to one of the registration marks, and step c is implemented again with the new intermediate position as the intermediate position.

9. Method according to any one of claims 1 to 8, comprising, after implementation of step e and before implementation of step f, a phase comprising:
determining additional subpixel positions arranged on said interpolation curves and located between registration marks at defined positions relative to the registration marks,
determining a set of additional interpolation curve parameters passing through said positions of the additional subpixels, and wherein, in step e, registration of the subpixel matrix is implemented using the set of interpolation curve parameters, the set of additional interpolation curve parameters, and all the positions of the additional subpixels and target positions of the subpixels.

10. Method according to claim 9, wherein the interpolation curves define finite elements, and, for each finite element, additional interpolation curve parameters specific to each finite element are determined, the positions of the additional subpixels being points of the finite element.

11. Method according to any one of claims 1 to 10, wherein the subpixels are arranged, by their target position, according to a repeated pattern of subpixels all associated with different colours.

12. Method of claim 11, wherein the sub-pixels are printed on a layer of the document and the sub-pixels of the same pattern each have a different colour to form a colour base, or the sub-pixels are formed in a diffractive layer of the document and the sub-pixels of the same pattern each produce a different colour effect by diffraction to form a colour base.

13. Method according to any one of claims 1 to 12, wherein a personalisation of the security document based on registering the subpixel matrix is implemented.

14. System for registering a subpixel matrix (201) arranged within a security document (200), the subpixels each being associated with a colour and a target position,
the document further comprising registration marks (202) arranged around or within the subpixel matrix, each registration mark having a given shape and being associated with at least one colour, the system being configured to implement:
a - obtaining the position within the document of the registration marks (MR),
b - determining an intermediate position (PI) located between at least two positions of obtained and adjacent registration marks,
c - determining the position (SPI) of the subpixel associated with a colour of interest that is closest to the intermediate position,
d - determining a set of interpolation curve parameters passing through the positions of the registration marks and through the position of said subpixel associated with the colour of interest,
e - registering the subpixel matrix using the set of interpolation curve parameters and the target positions of the subpixels.

15. Computer program including instructions for performing the steps of an authentication method according to any one of claims 1 to 13, when said program is executed by a computer of the system according to claim 14.

16. Computer-readable recording medium on which a computer program is recorded comprising instructions for executing on the system according to claim 14 the steps of an authentication method according to any one of claims 1 to 13.
